# EUROPÄISCHE PATENTSCHRIFT

(11) **EP 0 791 886 B1**
(45) Veröffentlichungstag und Bekanntmachung des Hinweises auf die Patenterteilung: **03.05.2006**
(21) Anmeldenummer: 97102899.8
(22) Anmeldetag: 21.02.1997
(51) Int. Cl.: G06F 17/30, G06Q 10/00

(54) **Verfahren zum rechnergestützten Abgleich mehrerer, in mindestens einem Rechner gespeicherten Dateikopien einer gesprecherten Datei**
Method for the computerized adjustment of several file copies of a stored file, stored in at least one computer
Procédé pour l'ajustement informatisé de plusieurs copies de fichiers d'un fichier stocké, stockées dans au moins un ordinateur

(30) Priorität: 26.02.1996 DE 19607132
(43) Veröffentlichungstag der Anmeldung: 27.08.1997
(73) Patentinhaber: SIEMENS AKTIENGESELLSCHAFT, 80333 München (DE)
(72) Erfinder: Berger, Michael, D-85635 Höhenkirchen (DE)

(56) Entgegenhaltungen:
- EP-A- 0 663 640
- DAVIDSON, S.: "Consistency in partitioned networks" COMPUTING SURVEYS, Bd. 17, Nr. 3, September 1985, Seiten 341-370, XP002074487
- KOLLAND, M.: "Support for information sharing in CSCW based on causally and totally ordered group communication" INTERNATIONAL WORKSHOP ON THEORY AND PRACTICE IN DISTRIBUTED SYSTEMS, 5. - 9. September 1994, Seiten 64-82, XP002074486 Dagstuhl castle, Germany
- MUNSON, J.P., DEWAN, P.: "A flexible object merging framework" PROCEEDINGS OF THE CONFERENCE ON COMPUTER SUPPORTED COOPERATIVE WORK, 22. - 23. Oktober 1994, Seiten 231-242, XP002074488 Chapel Hill, NC, USA

## Beschreibung

Die Erfindung betrifft ein Verfahren, das in verteilten gemeinsamen Arbeitsumgebungen, sogenannten Groupware-Systemen und sogenannten CSCW-Systemen (Computer Supported Cooperative Work) Anwendung findet. Diese Systeme sind nützlich zur Unterstützung verschiedenster Arten gemeinsamer Arbeit verschiedener Teilnehmer unterschiedlicher Arbeitsgruppen an Rechnern.

CSCW-Systeme können jedoch nur dann effizient eingesetzt werden, wenn sie einen einfachen Übergang zwischen synchroner und asynchroner gekoppelter Zusammenarbeit der verschiedenen Teilnehmer an dem CSCW-System unterstützen.

Gekoppelte Zusammenarbeit zwischen Teilnehmern bedeutet in diesem Zusammenhang, daß alle Nachrichten, die von einem Teilnehmer des CSCW-Systems gesendet werden, an alle anderen Teilnehmer, die zu dem jeweiligen Zeitpunkt in dem CSCW-System eingebunden sind, übermittelt werden.

Dies erfolgt bei der synchronen gekoppelten Zusammenarbeit in Echtzeit. Ist diese Echtzeitbearbeitung, d.h. die Versendung und Empfang der Nachrichten in Echtzeit an alle Teilnehmer bzw. von allen Teilnehmern des CSCW-Systems nicht möglich, bedeutet dies, daß die Teilnehmer in sogenannter asynchroner gekoppelter Zusammenarbeit arbeiten.

Gekoppelte Zusammenarbeit bezieht sich hierbei auf alle Möglichkeiten des elektronischen Datenaustauschs zwischen über Kommunikationsnetze gekoppelten Rechnern. Darunter sind beispielsweise eine Audio/Videokonferenz, sogenanntes Data Sharing oder auch Application Sharing, Electronic Mail oder sogenannte Verteilte Kalender Tools zu verstehen. Diese Auflistung ist jedoch in keiner Weise als abschließend anzusehen.

Als ein sehr einfaches Beispiel kann man sich in diesem Zusammenhang zwei an unterschiedlichen Orten befindendliche Teilnehmer des CSCW-Systems vorstellen, die gemeinsam ein Dokument entwickeln, beispielsweise ein Hilfedokument für ein Softwarewerkzeug. Jeder Teilnehmer entwickelt seinen Teil des Dokuments asynchron, d.h. völlig unabhängig von dem anderen Teilnehmer. Jedoch ist es von Zeit zu Zeit nötig, daß sich diese beiden Teilnehmer miteinander austauschen oder sogar andere Teilnehmer hinzunehmen, um die unabhängige Entwicklung der Teile des Dokuments zu dem Gesamtdokument zusammenzuführen. Hierbei kann beispielsweise das Nutzen einer Videokonferenz und des Application Sharings eine sehr effiziente Methode für eine Unterstützung einer Zusammenführung der Teile des Dokuments zu dem schließlich zu entwickelnden Gesamtdokument sein.

Um jedoch auch mit mobilen und ortsunabhängigen Teilnehmern effektiv zusammenarbeiten zu können, ist es von großer Bedeutung, daß die Arbeitsumgebung, beispielsweise das CSCW-System der Teilnehmer unabhängig ist von einer temporären physikalischen Verbindung der einzelnen Teilnehmer der gemeinsamen Arbeitsumgebung. Hierfür ist es notwendig, einen einfachen Übergang zwischen Phasen der gekoppelten Zusammenarbeit sowie der entkoppelten Zusammenarbeit zu schaffen.

In diesem Zusammenhang ist unter einer entkoppelten Zusammenarbeit die Situation zu verstehen, daß mindestens ein Teilnehmer der gemeinsamen Arbeitsumgebung entweder keine Nachrichten an die anderen Teilnehmer senden kann oder keine Nachrichten von diesen Teilnehmern empfangen kann.

Diese Möglichkeit der entkoppelten Zusammenarbeit, die auch als autonomes Arbeiten bezeichnet wird, verbessert die Zusammenarbeit vor allem in Organisationen, deren Teile der Organisation örtlich verteilt angesiedelt sind, wenn für die Übertragung von Daten hohe Kosten anzusetzen sind, oder das verwendete Netz einer hohen Belastung ausgesetzt ist bzw. sehr fehleranfällig ist.

Beispiele solcher Arbeitsumgebungen sind verteilte Büro-Arbeitsumgebungen und Entwicklungsgruppen, die nach der sogenannten Tele-Heimarbeit arbeiten oder auch verteilte Entwicklungswerkzeuge.

Das Replizieren, also Kopieren gemeinsam zugänglicher Daten ist die Voraussetzung für eine einfache Möglichkeit zur Schaffung eines Übergangs zwischen gekoppelter und entkoppelter Zusammenarbeit ohne eine größere Verzögerung spürbar aufkommen zu lassen. Dies versetzt beispielsweise die Teilnehmer einer gemeinsamen Arbeitsumgebung in die Lage, selbst bei auftretenden Verbindungsfehlern ohne Einschränkungen an der jeweils eigenen Kopie der Daten weiterzuarbeiten.

Wenn die Verbindung mit den anderen Teilnehmern wieder zustandekommt, müssen die während der entkoppelten Phase geänderten Daten wieder zu einer gemeinsamen, konsistenten Datenstruktur zusammengeführt werden. Es ist also ein Abgleich mehrerer unabhängiger, in mindestens einem Rechner gespeicherter Dateikopien einer Datei erforderlich.

Eine Übersicht über verschiedene bekannte Vorgehensweisen zum Abgleich mehrerer unabhängiger Dateikopien ist zu finden in [1] .

In [2] wird ein in einem mit dem Namen GINA bezeichneten System verwendetes Verfahren beschrieben. Dies ist ein Verfahren, bei dem den einzelnen Dateikopien Protokolldateien zugeordnet werden. Bei dem Verfahren in GINA werden bei der Bearbeitung der einzelnen Dateikopien während der autonomen Phase unterschiedliche Versionen durch die Ausführung von Änderungsoperationen erzeugt. Auf diese Weise wird in einer Protokolldatei ein sogenannter Baum mit zwei Ästen gebildet. Der Abgleich der Dateikopien wird dann in der Weise vorgenommen, daß einer der Äste an das Ende des anderen Astes angehängt wird. Dabei werden die Operationen, die in dem einen Ast aufgeführt werden, auf der anderen Seite ebenfalls ausgeführt. Dieses Verfahren ist unflexibel. Außerdem werden in diesem Verfahren weder einzelne Konflikte berücksichtigt noch die Reihenfolge der Konfliktbeseitigung.

Dies bedeutet einen unnötigen zusätzlichen Rechenaufwand während des Abgleichs der Daten auf den jeweiligen Rechnern. Weiterhin ist dieses Verfahren nur angegeben für den direkten Abgleich von zwei Dateikopien.

Ein weiteres Verfahren, das das in einem als COCOON bezeichneten System verwendet wird, ist in [3] beschrieben. Auch bei diesem Verfahren werden jeweils den Dateikopien zugeordnete Protokolldateien verwendet. Das Verfahren verwendet jedoch eine feste chronologische Reihenfolge zum Abgleich der Dateikopien, in dem es die Protokolldateien von Anfang bis Ende "durcharbeitet" und die einzelnen dort aufgeführten Änderungen chronologisch nacheinander abarbeitet. Dieses Verfahren birgt den Nachteil in sich, daß bestimmte Abgleiche durch beschränktes Wissen über Änderungsoperationen in der Protokolldatei unnötigigerweise durchgeführt werden oder sogar später eventuell revidiert werden müssen, beispielsweise Abgleiche von Strukturänderungen von später gelöschten Datensätzen.

Dies bedeutet einen erhöhten Bedarf an Rechenzeit zur Durchführung des in [3] beschriebenen Verfahrens durch einen Rechner.

Der Erfindung liegt somit das Problem zugrunde, ein Verfahren zum rechnergestützten Abgleich mehrerer unabhängiger, in mindestens einem Rechner gespeicherten Dateikopien einer Datei anzugeben, das mit erheblich reduziertem Rechenzeitbedarf auskommt.

Das Problem wird durch das Verfahren gemäß Patentanspruch 1 gelöst. Weiterbildungen der Erfindung ergeben sich aus den abhängigen Ansprüchen.

Bei dem Verfahren zum rechnergestützten Abgleich mehrerer, in mindestens einem Rechner gespeicherten Datenkopien einer gespeicherten Datei weist die Datei Datensätze auf, welche in Form einer Datenbankstruktur miteinander verknüpft sind. Jeder Dateikopie wird eine Protokolldatei zugeordnet. Änderungsoperationen an den Dateikopien werden in den zugeordneten Protokolldateien gespeichert. Anhand der Protokolldateien erfolgt ein Abgleich der Dateikopien, wobei Konflikte zwischen den Protokolldateien entdeckt werden. Das erfindungsgemäße Verfahren ist dadurch gekennzeichnet, dass Klammerkonstrukte vorgesehen sind, mit denen Änderungsoperationen in eine Folge von Änderungsoperationen zusammengefasst werden, welche eine komplexe Änderungsoperation definiert. Jeweils eine komplexe Änderungsoperation wird abgeglichen, indem entsprechende Änderungen der Datei oder der Dateikopien jeweils ohne Unterbrechung durchgeführt werden.

Gemäß einer Ausführungsform des erfindungsgemäßen Verfahrens werden mindestens einem Benutzer Vorschläge zugänglich gemacht, wenn Konflikte zwischen den Protokolldateien entdeckt werden. Der Abgleich der entdeckten Konflikte erfolgt dann abhängig von Benutzerentscheidungen über die Vorschläge.

In einer anderen Ausführungsform des erfindungsgemäßen Verfahrens wird aus den Protokolldateien jeweils mindestens eine Referenzprotokolldatei gewählt, welche bei dem Abgleich der entdeckten Konflikte vorrangig behandelt wird.

Der Abgleich der Dateikopien kann erfolgen, indem jeweils eine Folge von Änderungsoperationen zwischen den Protokolldateien verglichen wird. Die Folge wird als Ganzes verglichen zwischen den Protokolldateien. Ein Konflikt wird zum Beispiel dann entdeckt, wenn eine Löschoperation (Delete) in einer ersten Protokolldatei gefunden wurde, diese jedoch nicht in einer zweiten Protokolldatei zu finden ist. Die Benutzerentscheidung kann auch von mehreren Benutzern getroffen werden.

Der Vorteil der Referenzprotokolldatei liegt darin, dass die endgültige Entscheidung über den Abgleich nicht von den Benutzern für jeden Datensatz einzeln durchgeführt werden muss, sondern dass durch die Definition der Referenzprotokolldatei eine Entscheidungshierarchie aufgebaut wird. Dies bedeutet, dass bei Auftreten von Konflikten zwischen der Referenzprotokolldatei und einer weiteren Protokolldatei sich immer die Änderung, die sich in der Referenzprotokolldatei befindet, in dem endgültigen Abgleich der Dateikopien zu der Datei durchsetzt.

Gemäß einer Ausführungsform werden für vorgebbare Änderungsoperationen unterschiedliche Referenzprotokolldateien bestimmt.

In einer Weiterbildung des erfindungsgemäßen Verfahrens wird die Reihenfolge der untersuchten Änderungsoperationen in den einzelnen Protokolldateien bei dem erfindungsgemäßen Verfahren in der Weise festgelegt, daß zu Beginn des Verfahrens alle Löschoperationen (delete) von Datensätzen oder Kreierungsoperationen (create) von Datensätzen der Datei oder den Dateikopien abgeglichen werden.

Erst nachdem alle Löschoperationen oder Kreierungsoperationen in den Protokolldateien berücksichtigt wurden in dem gesamten rechnergestützten Abgleich der Dateikopien, welchen andere Operationen, beispielsweise Strukturänderungsoperationen (createLink, deleteLink) oder auch Änderungsoperationen an den eigentlichen Attributen der Datensätze (changeAttribute), durchgeführt.

In einer Weiterbildung des erfindungsgemäßen Verfahrens werden einzelne Datensätze Informationsräumen zugeteilt. Hierbei ist zu betonen, daß für dieses Verfahren eine hierarchische Struktur der Datensätze in der Datenbank vorausgesetzt wird.

Bei Durchführung des Abgleichs der Dateikopien erfolgt nun die Ermittlung der Vorschläge zuerst auf Basis ganzer Informationsräume, und dann jeweils ausgehend von der Wurzel hierarchisch fortschreitend hin zu den sogenannten Blättern des Datenbaums.

Hierdurch werden wiederum nicht erforderliche Abgleichsoperationen vermieden, da beispielsweise bei einer Einigung über einen Abgleich global für einen ganzen Informationsraum viele Operationen von Änderungen der Datensätze, die sich in diesem Informationsraum befinden, unnötig werden. Damit wird eine erhebliche Rechenzeitersparnis erreicht.

Es ist vorteilhaft, nach Abgleich aller Löschungsoperationen und/oder Kreierungsoperationen alle Strukturveränderungsoperationen abzugleichen und erst dann Operationen zur Änderung einzelner Attribute der Datensätze zu berücksichtigen. Dies führt zu einer weiteren Ersparnis an Rechenzeit bei der Durchführung des erfindungsgemäßen Verfahrens durch einen

Rechner.

Weiterhin ist es vorteilhaft, semantische Aspekte der Änderungen der Datensätze zu berücksichtigen, beispielsweise bestimmte Zeiträume, in denen Änderungen stattgefunden haben oder auch die Priorisierung bestimmter Teilnehmer, die Änderungsoperationen durchgeführt haben beim Abgleich der einzelnen Dateikopien.

Ein Ausführungsbeispiel der Erfindung ist in den Figuren dargestellt und wird im folgenden näher erläutert.

Es zeigen:
- Figur 1: ein Ablaufdiagramm, das eine Weiterbildung des Verfahrens gemäß Patentanspruch 4 beschreibt;
- Figur 2: ein Ablaufdiagramm, das eine Weiterbildung des Verfahrens gemäß Patentanspruch 5 beschreibt;
- Figuren 3a und 3b: ein Ablaufdiagramm, das eine Weiterbildung des Verfahrens beschreibt;
- Figuren 4a und 4b: ein Ablaufdiagramm, das eine Weiterbildung des Verfahrens beschreibt;
- Figuren 5a und 5b: in Form einer Skizze eine Darstellung, die die eindeutigen Kennzeichen einzelner Sequenzen abhängig von der Änderung einzelner Teilnehmer in einer Sitzung einer Gruppen-Arbeitsumgebung zu zwei unterschiedlichen Zeitpunkten;
- Figur 6: ein Beispiel einer Datei mit einzelnen Datensätzen, die in Form einer Datenbankstruktur miteinander gekoppelt sind;
- Figur 7: eine Anordnung mehrerer Rechner, mit deren Hilfe die einzelne Dateikopien miteinander abgeglichen werden.
- Figur 8: ein Ablaufdiagramm, das einzelne Verfahrensschritte des Verfahrens gemäß Patentanspruch 1 beschreibt;
- Figur 9: ein Ablaufdiagramm, das einzelne verfahrensschritte des Verfahrens gemäß Patentanspruch 2 beschreibt;

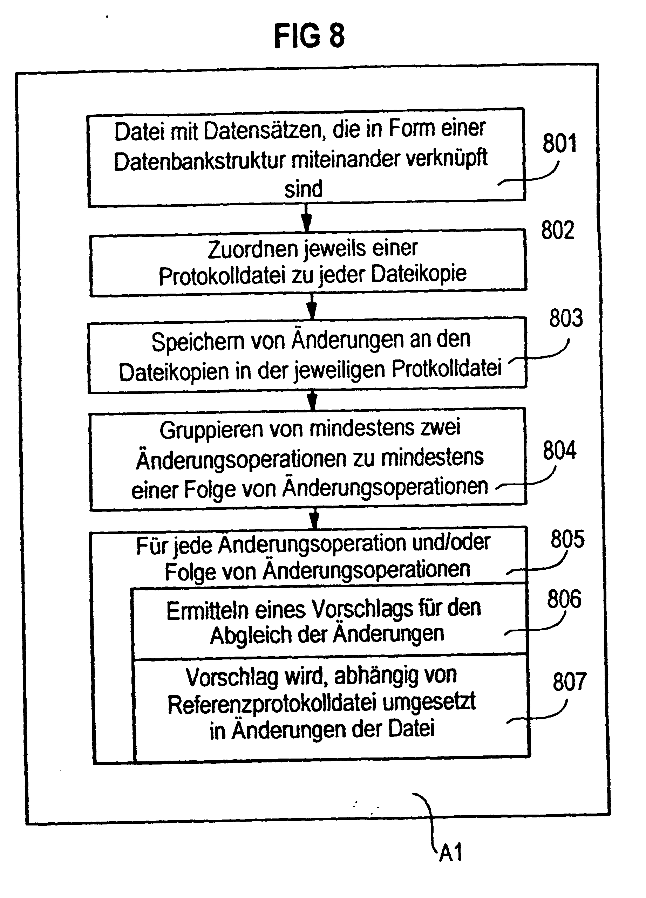

In Figur 8 sind die Schritte des erfindungsgemäßen Verfahrens dargestellt.

Das Verfahren geht von einer Datei D aus, die Datensätze aufweist, die in Form einer Datenbankstruktur miteinander verknüpft sind 801.

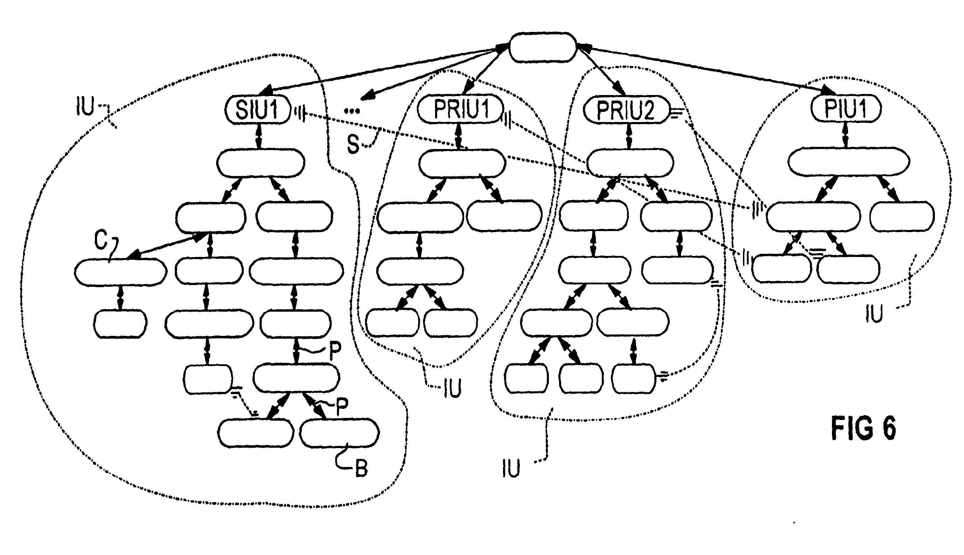

Ein Beispiel einer solchen Datei D ist in Figur 6 dargestellt, wobei die einzelnen Verknüpfungen jeweils durch Pfeile zwischen den Datensätzen, die durch Ellipsen dargestellt sind, beschrieben sind. Hierbei sind hierarchische Verknüpfungen zwischen zwei Datensätzen dargestellt durch jeweils einen durchgezogenen Pfeil, durch den eine hierarchische Kopplung P beschrieben wird. Hierarchisch bedeutet in diesem Zusammenhang, daß jeweils ein Objekt einem Elterndatensatz zugeordnet ist.

Weiterhin können Containerdatensätze C in einer dem jeweiligen Datensatz hierarchisch untergeordneten Ebene Kinderdatensätze aufweisen, mit denen der jeweilige Datensatz ebenso über die hierarchische Kopplung P verbunden ist.

Weist die Datei ausschließlich Datensätze auf, die über hierarchische Kopplungen P miteinander verbunden sind, so weist die gesamte Datei eine sogenannte Baumstruktur auf, also eine streng hierarchisch gegliederte Struktur.

Die Datensätze können jedoch auch über Sekundärkopplungen S miteinander verbunden sein. Über die Sekundärkopplungen sind die einzelnen Datensätze über Querverbindungen innerhalb der Baumstruktur verbunden, wodurch die hierarchische Baumstruktur "aufgelöst' wird und eine allgemein vernetzte Struktur von Datensätzen entsteht.

In Figur 6 sind einzelne Datensätze, Containerdatensätze C, die hierarchische Kopplungen P zu in der hierarchischen Ordnung unterhalb des jeweiligen Containerdatensatzes C angeordneten Datensätzen aufweisen, dargestellt. Weitere Typen von Datensätzen sind Blattdatensätze B, die innerhalb der Baumstruktur auf der "untersten Hierarchieebene" angesiedelt sind und somit abhängig sind von dem jeweiligen Elterndatensatz. Sie weisen nur eine hierarchische Kopplung P zu ihrem jeweiligen Elterndatensatz auf. Dieser Elterndatensatz ist ein Containerdatensatz C.

Einzelne Bereiche der Datensätze kann man, wie im weiteren noch beschrieben wird, in Informationsräume IU einteilen.

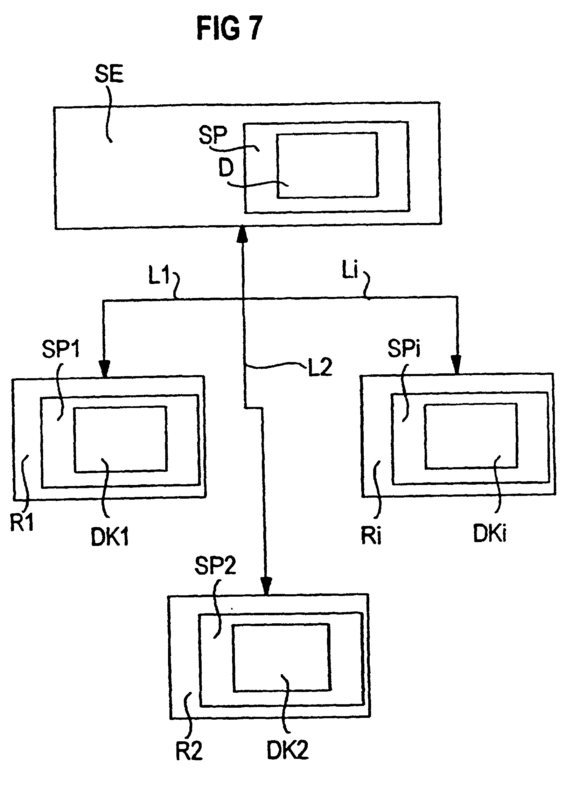

In Figur 7 ist eine Anordnung von verschiedenen Rechnern Ri dargestellt. In diesem speziellen Ausführungsbeispiel wird von einem zentralen Server SE ausgegangen, der einen Speicher SP aufweist, in dem die Datei D gespeichert wird. Diese Rechner Ri, wobei i einen Index bezeichnet, der die einzelnen Rechner Ri eindeutig kennzeichnet und eine beliebige natürliche Zahl ist, sind jeweils über eine Leitung Li mit dem Server SE gekoppelt.

Dieses Beispiel soll nur zur Darstellung der Rahmensituation dienen, in dem das Verfahren angewendet werden kann. Es schränkt jedoch die Allgemeingültigkeit, also die Verwendung des Verfahrens bei Vorhandensein mindestens zweier Rechner Ri ein, die jeweils nur untereinander gekoppelt sind, also ohne eine Existenz des zentralen Servers SE, in keinster Weise ein. Auch in diesem Falle kann das Verfahren ohne Veränderungen in den einzelnen Verfahrensschritten durchgeführt werden.

Die im vorigen beschriebene synchrone gekoppelte Zusammenarbeit ist dann möglich, wenn alle Rechner Ri entweder direkt miteinander und/oder über den Server SE miteinander gekoppelt sind und die einzelnen Änderungen, d.h. die Nachrichten über Änderungen an den Dateikopien DKi, die jeweils in den Speichern SPi der jeweiligen Rechner Ri gespeichert sind, sofort an alle anderen Rechner Ri übertragen wird in der gleichen zeitlichen Reihenfolge wie die durchgeführten Änderungen.

Die abgekoppelte Zusammenarbeit entsteht in dem Moment, wenn für einen der Rechner Ri die Verbindung zu den anderen Rechnern Ri unterbrochen wird, und über eine beliebig lange Zeit Änderungen an den Datensätzen der Dateikopie Dki, die sich auf dem abgekoppelten Rechner Ri befindet, durchgeführt werden. Nachdem mindestens ein Rechner Ri aus der gemeinsamen Arbeitsumgebung abgekoppelt wurde und dann in den Dateikopien DKi Änderungen vorgenommen wurden, wird der jeweilige Rechner Ri wieder in die gemeinsame Arbeitsumgebung angekoppelt.

Das Verfahren beschränkt sich jedoch nicht nur auf den Fall, daß jeweils nur ein einziger Rechner abgekoppelt ist, sondern es ist ebenso vorgesehen, daß mehrere Rechner zu einer bestimmten Zeit abgekoppelt sein können.

Bei der Ankopplung der bzw. des jeweiligen Rechners Ri in die gemeinsame Arbeitsumgebung tritt nunmehr das Problem auf, daß die Datensätze der Dateikopie DKi des jeweils wieder angekoppelten Rechners Ri unterschiedlich ist, verglichen mit den Datensätzen der ursprünglichen Datei D bzw. den anderen Dateikopien DKi. Zur Ermittlung einer Datei, die nunmehr für alle, auch für den wiederangekoppelten Rechner Ri gilt, also zur Ermittlung von konsistenten Datensätzen und einer gleichen Struktur der Datensätze, müssen die unterschiedlichen Dateikopien DKi miteinander abgeglichen werden.

Bei dem Abgleich der Dateikopien DKi werden Inkonsistenzen der Datensätze bzw. der Struktur der Datei ermittelt. Diese sogenannte Konflikterkennung kann auf unterschiedliche Weise durchgeführt werden, beispielsweise durch einen kompletten Vergleich der Datensätze der sich unterscheidenden Dateikopien DKi. Da dies jedoch sehr aufwendig ist, wird in dem erfindungsgemäßen Verfahren eine alternative Vorgehensweise gewählt.

Hierbei wird jeder Dateikopie DKi eine Protokolldatei PDi zugeordnet 802, in der alle Änderungen, die an der Dateikopie DKi vorgenommen werden, gespeichert werden 803. Der Abgleich findet dann anhand eines Vergleichs der unterschiedlichen Protokolldateien PDi statt. Dieses Vorgehen ist beispielsweise in [3] beschrieben.

In einem weiteren Schritt ist es vorgesehen, eine beliebige Anzahl von Änderungsoperationen in mindestens eine Folge von Änderungsoperationen zu gruppieren 804 beispielsweise durch Klammerung der Änderungsoperationen.

Die Klammerkonstruktionen zur Definition zusammengesetzter Änderungsoperationen werden bei der Vorgehensweise zum Abgleich der Dateikopien DKi berücksichtigt.

Durch Klammerkonstruktionen werden also "atomare" Änderungsoperationen zu einer Folge von Änderungsoperationen zusammengefaßt. Dadurch werden zusammengesetzte Änderungsoperationen definiert, die bei einem Vergleich der Protokolldateien PDi als eine zusammengesetzte Änderungsoperation behandelt wird.

Damit wird es auch möglich, eine Sequenz von "atomaren" Änderungsoperationen als eine komplexe Änderungsoperation ohne Unterbrechung durch andere Änderungsoperationen auszuführen.

Hierzu ist die Verwendung systemweit eindeutig identifizierbaren Klammernachrichten notwendig, mindestens einem Klammernachrichtenpaar, welches eine KlammerAuf-Nachricht und eine KlammerZu-Nachricht aufweist. Die Folge von Änderungsoperationen, zwischen deren Ausführung keine Ausführung einer anderen Änderungsoperation, die nicht in der Klammerkonstruktion ist, zulässig ist ergibt sich aus jedem Klammernachrichtenpaar eindeutig zugeordneten Nachrichten-Identikatoren für jede Änderungsoperation.

Die Auswertung der jeweiligen Klammerung von Änderungsoperationen mit mindestens einem Klammernachrichtenpaar kann sowohl bei dem zentralen Server SE als auch bei den Rechnern Ri erfolgen.

Für den Fall, daß die Auswertung in dem zentralen Verteilungsrechner durchgeführt wird, werden nach dem Empfang einer KlammerAuf-Nachricht von einem Rechner Ri alle weiteren zu dieser KlammerAuf-Nachricht gehörenden Änderungsoperationen und die KlammerAuf-Nachricht selbst und weitere Klammernachrichten an die alle "angekoppelten" Rechner Ri weitergesendet. Alle anderen Änderungsoperationen werden von dem zentralen Verteilungsrechner zurückgehalten, also nicht an die Rechner Ri weitergesendet, bis die zu der KlammerAuf-Nachricht gehörende KlammerZu-Nachricht von dem zentralen Verteilungsrechner empfangen wird.

Für den Fall jedoch, daß die Auswertung in den Rechnern Ri durchgeführt wird, werden nach Empfang einer KlammerAuf-Nachricht alle zu dieser KlammerAuf-Nachricht gehörenden Änderungsoperationen sofort in der entsprechenden Reihenfolge, die beispielsweise durch Klammer-Sequenznummern bestimmt wird, die jede Klammernachricht aufweist, durchgeführt werden. Alle anderen Nachrichten, also Änderungsoperationen werden zwar gespeichert, aber nicht ausgeführt, bis die entsprechende KlammerZu-Nachricht empfangen wurde.

Auf diese Weise wird gewährleistet, daß eine geklammerte Folge von atomarent% Änderungsoperationen als eine komplexe Änderungsoperation, ohne eine Unterbrechung durch andere, nicht in die Klammer gehörenden Änderungsoperationen, ausgeführt wird.

Auch eine Verschachtelung mehrer Klammernachrichten ist auf einfache Weise möglich.

Der Abgleich für jede Änderungsoperation und/oder Folge von Änderungsoperationen 805 erfolgt jeweils durch Ermittlung eines Vorschlags für den Abgleich 806. Dazu werden beispielsweise einfach die Inhalte der einzelnen Protokolldateien PDi, die abgeglichen werden sollen, miteinander verglichen.

Ist nun ein Konflikt zwischen den mindestens zwei zu vergleichenden Protokolldateien PDi erkannt worden, so wird den Benutzern, die an den jeweiligen Rechnern, die die Protokolldateien PDi gespeichert haben, der jeweilige Änderungsvorschlag unterbreitet. Dieser kann beispielsweise die Übernahme eines in einer abgekoppelten Dateikopie DKi generierten Datensatzes in die gesamte Datei, und somit in alle Dateikopien DKi oder auch der umgekehrte Fall des Löschens eines Datensatzes aus allen Dateikopien DKi durch Abgleich mit dem mindestens einen neuen angekoppelten Rechner Ri und dessen Protokolldatei PDi sein.

In einer ersten Variante des Verfahrens wird über diesen Vorschlag von den Benutzern entschieden.

Stimmen die Benutzer der vorgeschlagenen Änderung zu, so wird der Vorschlag in Form einer Änderung in der Datei und allen "angeschlossenen" Dateikopien DKi durchgeführt 807. Können sich die Benutzer nicht auf eine Übernahme des Vorschlags einigen, kann nun in einer Weiterbildung des Verfahrens vorgeschlagen werden, eine frühere, konsistente Struktur von Datensätzen als neue, gemeinsame Datei D wiederzuverwenden.

Auch über diesen Vorschlag können dann die jeweiligen Benutzer selbständig entscheiden.

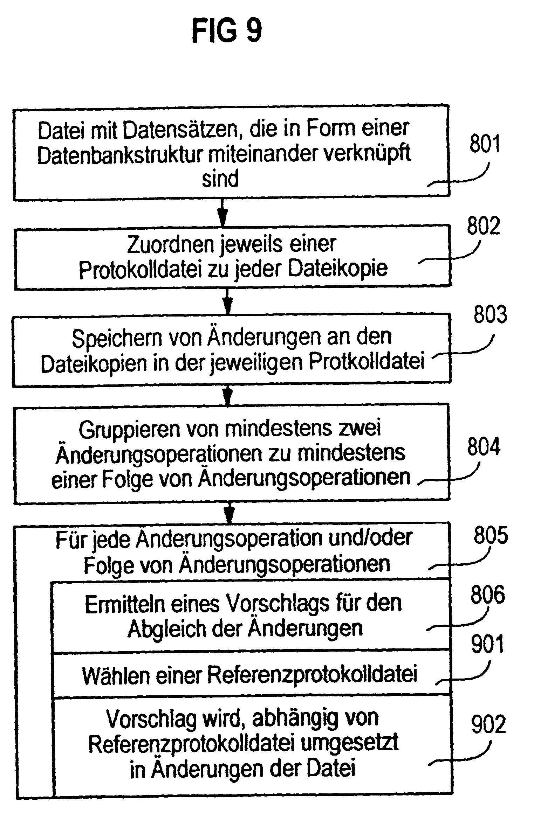

Eine zweite Variante unterscheidet sich nur in geringer Weise von dem im vorigen beschriebenen Verfahren. Der Unterschied zwischen der zweiten Variante zu der ersten ist darin zu sehen, daß nicht mehr wie in der ersten Variante der jeweils ermittelte Vorschlag für den Abgleich abhängig von Benutzerentscheidungen in Änderungen der Datei umgesetzt wird 807, sondern, wie in Figur 9 beschrieben, anstatt dieses Verfahrensschritts eine Referenzprotokolldatei aus den Protokolldateien PDi ausgewählt wird 901.

Änderungen an den Dateikopien DKi, also an den Datensätzen der einzelnen Dateikopien DKi können durch unterschiedliche Änderungsoperationen erfolgen.

Die Änderungen der Datei D werden nunmehr bei Konflikterkennung zwischen der Referenzprotokolldatei und den anderen Protokolldateien PDi in der Weise ermittelt, daß jeweils die Änderung, die in der Referenzprotokolldatei gespeichert ist, oder, falls nur eine Änderung in der Protokolldatei PDi gespeichert ist und in der Referenzprotokolldatei keine Änderung gespeichert ist, jeweils die Entscheidung aus der Referenzprotokolldatei resultiert, also übernommen wird 902 (vgl. Figur 9).

Es wird beispielhaft von fünf unterschiedlichen Änderungsoperationen ausgegangen. Weitere Änderungsoperationen sind dem Fachmann bekannt und können ohne weiteres in dem erfindungsgemäßen Verfahren berücksichtigt werden.

Diese fünf Änderungsoperationen sind die folgenden:
- Kreierungsoperationen von Datensätzen (create object): die Kreierungsoperationen fügen einen Datensatz, der eindeutig durch einen Datensatzidentikator gekennzeichnet wird, in das Netz der Datensätze, also in die Datei D, ein;
- Löschungsoperationen von Datensätzen (delete object): die Löschungsoperationen löschen das jeweils durch den angegebenen Datensatzidentikator eindeutig in der Datei D gekennzeichneten Datensatz aus dem Netz aller Datensätze, also aus der Datei D; zusätzlich werden durch die Löschungsoperationen alle hierarchisch unter dem gelöschten Datensatz angeordneten Datensätze ebenso gelöscht; ferner werden ebenso alle hierarchischen Kopplungen P als auch alle Sekundärkopplungen S, die sich auf den gelöschten Datensatz beziehen, gelöscht;
- Strukturänderungsoperationen (create link, delete link): die Strukturänderungsoperationen kreieren bzw. löschen hierarchische Kopplungen P und/oder Sekundärkopplungen S zwischen eindeutig durch Datensatzidentikatoren angegebenen Datensätzen;
- Attributänderungsoperationen (change attribute): die Attributänderungsoperationen dienen der Änderung einzelner Attribute der Datensätze.

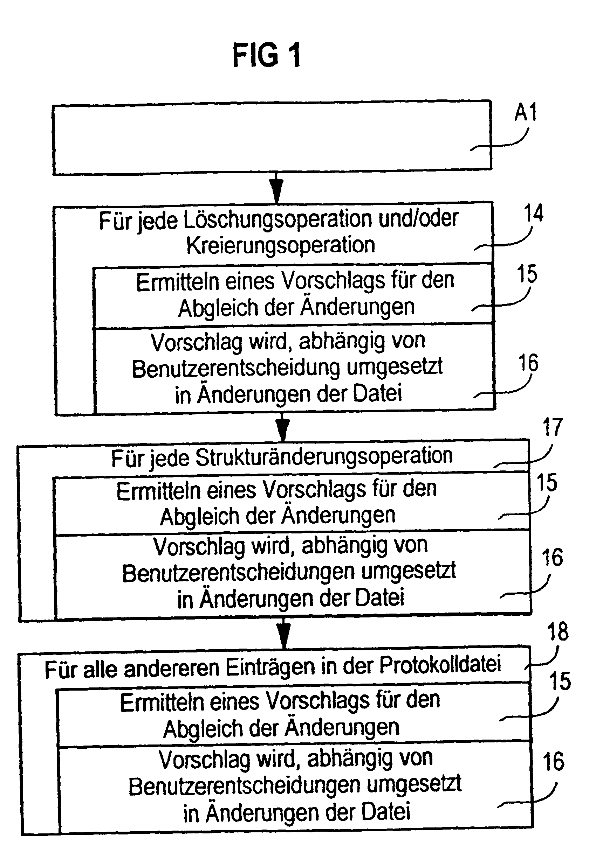

In Figur 1 ist ein Ablaufdiagramm dargestellt, das einzelne Verfahrensschritte einer Weiterbildung des erfindungsgemäßen Verfahrens beschreibt.

Zusätzlich zu dem Verfahren gemäß Patentanspruch 1 Al wird bei dieser Weiterbildung die Reihenfolge der Bearbeitung der in den Protokolldateien PDi gespeicherten Änderungsoperationen in folgender Weise festgelegt (vgl. Figur 1). Zuerst werden alle Löschungsoperationen oder alle Kreierungsoperationen miteinander verglichen 14.

Der Abgleich erfolgt wiederum durch Ermittlung eines Vorschlags für den Abgleich 15. Dazu werden beispielsweise einfach die Inhalte der einzelnen Protokolldateien PDi, die abgeglichen werden sollen, miteinander verglichen.

Ist nun ein Konflikt zwischen den mindestens zwei zu vergleichenden Protokolldateien PDi erkannt worden, so wird den Benutzern, die an den jeweiligen Rechnern, die die Protokolldateien PDi gespeichert haben, der jeweilige Änderungsvorschlag unterbreitet. Dieser kann beispielsweise die Übernahme eines in einer abgekoppelten Dateikopie DKi generierten Datensatzes in die gesamte Datei, und somit in alle Dateikopien DKi oder auch der umgekehrte Fall des Löschens eines Datensatzes aus allen Dateikopien DKi durch Abgleich mit dem mindestens einen neuen angekoppelten Rechner Ri und dessen Protokolldatei PDi sein.

In dem ersten Ausführungsbeispiel wird nun über diesen Vorschlag von den Benutzern entschieden.

Stimmen die Benutzer der vorgeschlagenen Änderung zu, so wird der Vorschlag in Form einer Änderung in der Datei und allen "angeschlossenen" Dateikopien DKi durchgeführt 16. Können sich die Benutzer nicht auf eine Übernahme des Vorschlags einigen, kann nun in einer Weiterbildung des Verfahrens vorgeschlagen werden, eine frühere, konsistente Struktur von Datensätzen als neue, gemeinsame Datei D wiederzuverwenden.

Auch über diesen Vorschlag können dann die jeweiligen Benutzer selbständig entscheiden.

Für den Fall, daß sich beide Benutzer dazu entschließen, den Abgleich gemäß dem Vorschlag durchzuführen, werden bei den Löschoperationen sowie den Kreierungsoperationen gleichzeitig auch die jeweiligen Kopplungen P, S, die als Parameter bei den Löschoperationen (delete) bzw. den Kreierungsoperationen (create) angegeben sind, mit in der schließlich durchgeführten Änderung aller Dateikopien DKi durch den Rechner berücksichtigt.

Diese Art des Vorgehens weist den erheblichen Vorteil auf, daß alle Strukturänderungsoperationen sowie alle Attributänderungsoperationen, die in den einzelnen Protokolldateien PDi gespeichert wurden und sich beispielsweise auf Datensätze beziehen, die durch Löschungsoperationen schon gänzlich aus der gesamten Datenstruktur gelöscht wurden, nicht mehr berücksichtigt werden müssen. Somit werden unnötige zusätzliche Abgleiche vermieden, was zu einer erheblich schnelleren Durchführung des gesamten Abgleichs durch den Rechner führt.

Nachdem alle Löschungsoperationen und alle Kreierungsoperationen "bearbeitet" wurden, werden in weiteren Schritten 17 iterativ alle gespeicherten Strukturänderungsoperationen, die sich noch nicht erledigt haben durch die bearbeiteten Löschungsoperationen (delete) oder Kreierungsoperationen (create), durchgeführt.

"Erledigt" bedeutet in diesem Zusammenhang wie im vorigen beschrieben, daß sich die Strukturänderungsoperationen beispielsweise auf Datensätze beziehen, die gar nicht mehr existent sind, da sie beispielsweise durch Löschungsoperationen schon aus der Datei D entfernt wurden.

Auch das Bearbeiten der Strukturänderungsoperationen vor Berücksichtigung der Attributänderungsoperationen führt zu einer Verringerung des Rechenzeitbedarfs des Verfahrens.

Sind auch alle Strukturänderungsoperationen durch Ermitteln eines Vorschlags für den Abgleich 15 sowie der Umsetzung des Vorschlags eventueller Änderungen 16 durchgeführt worden, erfolgt nun die Berücksichtigung der verbliebenen "relevanten" Attributänderungsoperationen, die in den Protokolldateien PDi gespeichert sind 18. Die Bearbeitung der Attributänderungsoperationen erfolgt ebenso durch Ermitteln des Vorschlags für den Abgleich 15 und der Umsetzung eventuell in Änderungen der Datei 16.

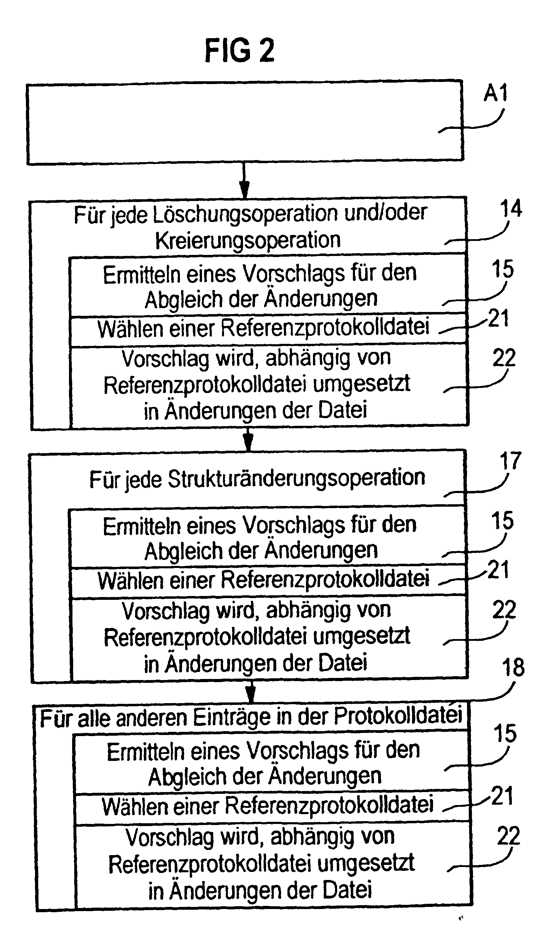

In einer in Figur 2 dargestellten Weiterbildung ist ein Verfahren beschrieben, das sich nur in geringer Weise von der im vorigen beschriebenen Weiterbildung unterscheidet. Der Unterschied zwischen dieser Weiterbildung zu der im vorigen beschriebenen Weiterbildung ist darin zu sehen, daß zwar die Reihenfolge für den Abgleich entsprechend dem in dem ersten Ausführungsbeispiel vorgeschlagenen Vorgehen ist, jedoch nicht mehr wie in dem ersten Ausführungsbeispiel der jeweils ermittelte Vorschlag für den Abgleich abhängig von Benutzerentscheidungen in Änderungen der Datei umgesetzt wird 16, sondern, wie in Figur 2 beschrieben, anstatt dieses Verfahrensschritts eine Referenzprotokolldatei aus den Protokolldateien PDi ausgewählt wird 21.

Die Änderungen der Datei D werden nunmehr bei Konflikterkennung zwischen der Referenzprotokolldatei und den anderen Protokolldateien PDi in der Weise ermittelt, daß jeweils die Änderung, die in der Referenzprotokolldatei gespeichert ist, oder, falls nur eine Änderung in der Protokolldatei PDi gespeichert ist und in der Referenzprotokolldatei keine Änderung gespeichert ist, jeweils die Entscheidung aus der Referenzprotokolldatei resultiert, also übernommen wird 22 (vgl. Figur 2) .

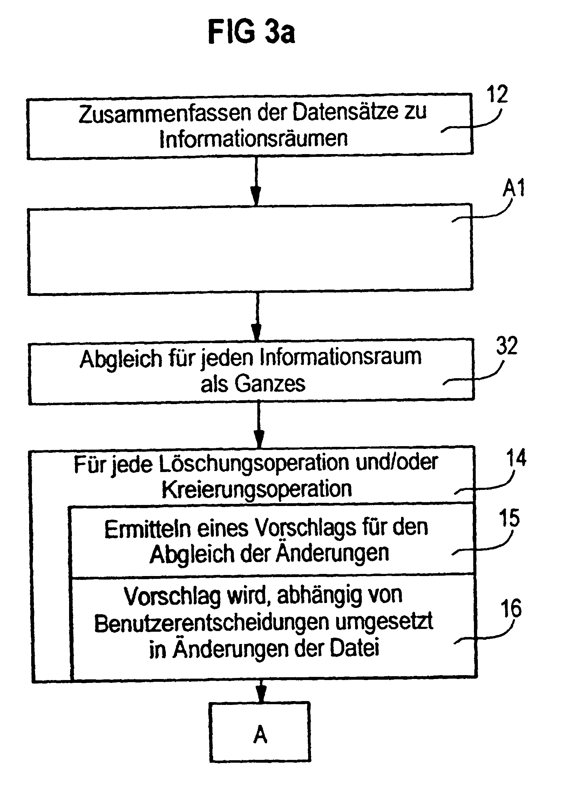

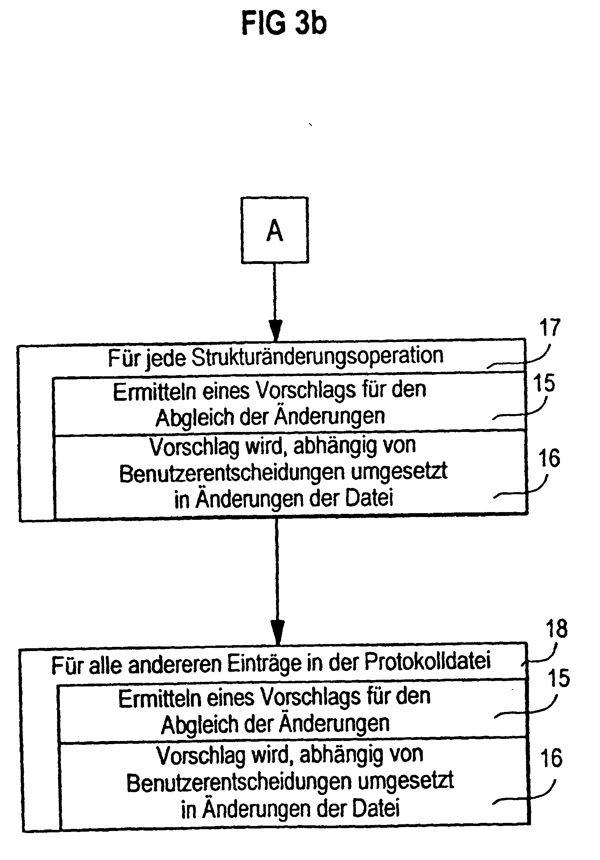

In den Figuren 3a und 3b ist ein Ablaufdiagramm, durch das eine dritte Weiterbildung des erfindungsgemäßen Verfahrens beschrieben wird, dargestellt.

Diese Weterbildung setzt auf einer Datei auf, deren Datensätze in Form einer hierarchischen Datenbankstruktur miteinander verknüpft sind. Dies bedeutet, daß in der Datenbankstruktur ausschließlich hierarchische Kopplungen P auftreten (vgl. Figur 6).

Die Datensätze werden in Mengen von Datensätzen eingeteilt werden, die als Informationsräume IU bezeichnet werden 31.

Der Abgleich erfolgt nun in dieser Weiterbildung in der Weise, daß zuerst versucht wird, auf oberster hierarchischer Ebene, also auf der jeweiligen Ebene der Informationsräume IU einen Abgleich als Ganzes zu erreichen 32.

Es wird also untersucht, ob Konflikte zwischen den Informationsräumen IU als Ganzes entstanden sind und entsprechend wird ein Vorschlag ermittelt, einen Informationsraum IU als Ganzes in die abzugleichende Datei D zu übernehmen. Der Vorschlag wird wiederum den Benutzern unterbreitet und, falls sich die Benutzer einigen auf einen der Konfliktinformationsräume als komplett neu zu verwendenden Informationsraum IU in der Datei D, so wird der jeweilige Informationsraum IU als Ganzes in die Datei kopiert, also der alte Informationsraum eventuell als Ganzes ersetzt.

Durch dieses "Top-Down"-Vorgehen innerhalb der hierarchischen Datenbankstruktur werden erhebliche Einsparungen von nicht erforderlichen Abgleichen erreicht, die in bekannten Verfahren durchgeführt werden müssen.

In einer Weiterbildung des Verfahrens ist es vorgesehen, falls für einen Informationsraum IU als Ganzes keine Einigung auf Übernahme in die Datei D gefunden wird, den Abgleich wiederum auf Ebene der einzelnen Änderungsen zu Datensätzen in den Informationsräumen IU durchzuführen, also in der Reihenfolge, zuerst Löschoperationen (delete) oder Kreierungsoperationen (create) zu bearbeiten und schließlich die Strukturänderungsoperationen sowie zum Schluß die übriggebliebenen Attributänderungsoperationen.

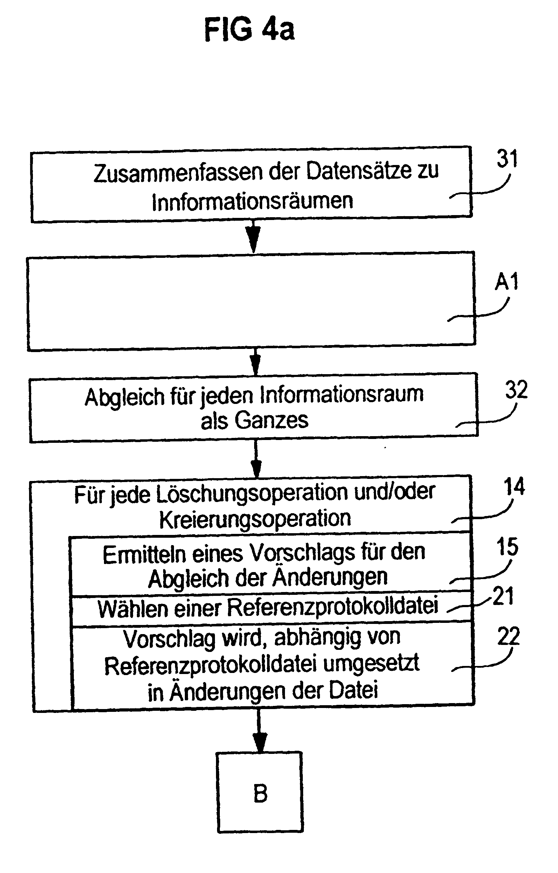

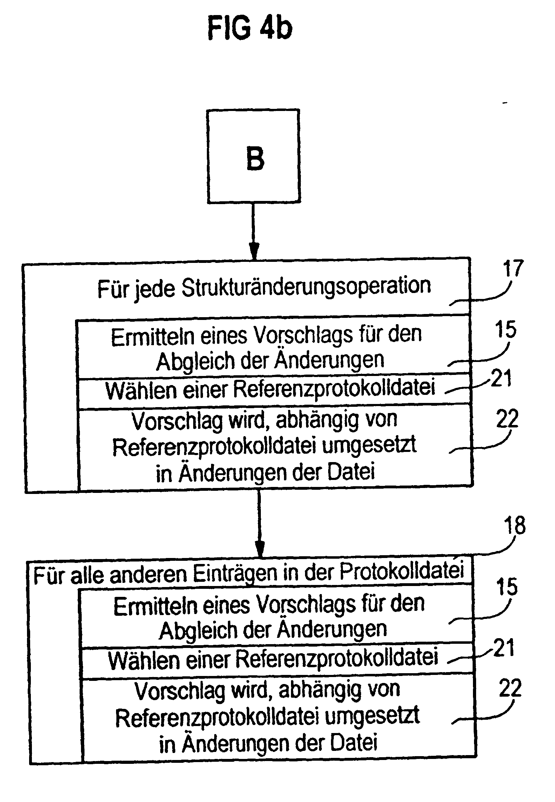

Bei der in den Figuren 4a und 4b dargestellte Weiterbildung sind alle Schritte äquivalent zu denen des in Figur 3 dargestellten Verfahrens, jedoch hängt die Änderung der Datei nicht von Benutzerentscheidungen ab, sondern es wird wiederum eine Referenzprotokolldatei aus den Protokolldateien PDi gewählt 41 und die Änderungen erfolgen abhängig von der Referenzprotokolldatei 42.

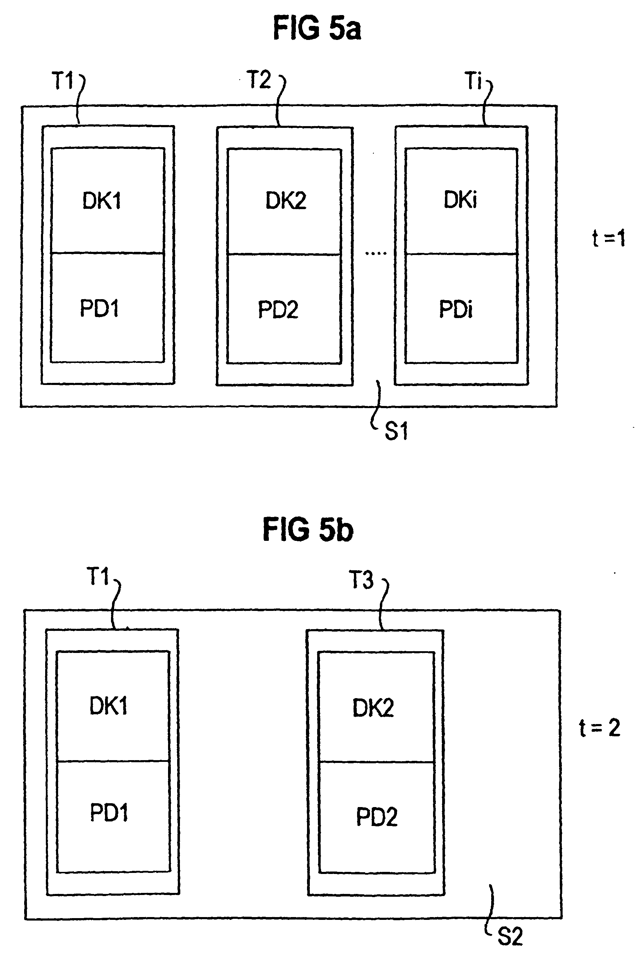

In den Figuren 5a und 5b ist eine Weiterbildung des Verfahrens für alle im vorigen beschriebenen Ausführungsbeispiele dargestellt.

In den Figuren 5a und 5b ist ein Beispiel von drei Teilnehmern in einer gemeinsamen Arbeitsumgebung dargestellt. Diese sind ein erster Teilnehmer T1, ein zweiter Teilnehmer T2, einem dritten Teilnehmer T3, sowie weitere Teilnehmer Ti. Die Teilnehmer T1, T2, T3 arbeiten jeweils an einem ersten Rechner R1, einem zweiten Rechner R2, einem dritten Rechner R3, sowie weiteren Rechnern Ri.

In den einzelnen Speichern SP1, SP2, SP3, SPi der Rechner R1, R2, R3, Ri sind die einzelnen Dateikopien DK1, DK2, DK3, DKi sowie die diesen zugeordneten Protokolldateien PD1, PD2, PD3, PDi gespeichert. Dies ist die Situation zu einem ersten Zeitpunkt t=1.

Diese Situation wird eindeutig gekennzeichnet durch eine erste Sequenznummer S1. Alle Änderungen, die in den Protokolldateien PDi gespeichert werden, werden in dieser Weiterbildung des erfindungsgemäßen Verfahrens unter der ersten Sequenznummer S1 zusammengefaßt.

Zu einem zweiten Zeitpunkt t=2 sind in der gemeinsamen Arbeitsumgebung nur noch der erste Teilnehmer T1 sowie der dritte Teilnehmer T3 vorhanden. Der zweite Teilnehmer T2 ist zu diesem Zeitpunkt von der gemeinsamen Arbeitsumgebung abgekoppelt.

Durch diese Abkopplung wird die neue Zusammensetzung der gemeinsamen Arbeitsumgebung mit einer zweiten Sequenznummer S2 bezeichnet, das heißt alle Änderungen in den Protokolldateien PD1 und PD3 werden ab der Abkopplung des zweiten Teilnehmers T2 mit der weiteren Sequenznummer S2 gekennzeichnet.

Die Figuren 5a und 5b sollen folgenden allgemeinen Fall verdeutlichen. Jede Änderung der Zusammensetzung einer gemeinsamen Arbeitsumgebung durch Abkoppeln oder Ankoppeln eines Teilnehmers wird durch eine eindeutige Sequenznummer gekennzeichnet. Dies vereinfacht die Vorgehensweise zum Abgleich der einzelnen Protokolldateien und somit der Dateikopien DKi erheblich. Dies bedeutet in anderen Worten, daß jeweils eine neue Sequenz generiert wird, wenn sich mindestens ein Teilnehmer ankoppelt oder mindestens ein Teilnehmer abkoppelt aus der gemeinsamen Arbeitsumgebung. Die generierte Sequenz ist dann auch die aktuelle Sequenz und alle während dieser Sequenz auftretenden und zu speichernden Änderungsoperationen werden dieser Sequenz zugeordnet und unter dieser Sequenz gespeichert.

In einer Weiterbildung der Verfahren ist es vorgesehen, die Semantik der einzelnen Änderungsoperationen mit zu berücksichtigen.

Dies kann beispielswese dadurch erfolgen, daß anhand wählbarer Vorgaben Änderungsoperationen Vorrang besitzen, die während eines bestimmten vorgebbaren Zeitraums ausgeführt wurden.

Auch eine Berücksichtigung dadurch, daß anhand wählbarer Vorgaben Änderungsoperationen Vorrang besitzen, die sich auf bestimmte vorgebbare Datensätze und/oder Informationsräume IU beziehen, ist in einer Weiterbildung der Verfahren vorgesehen.

Weitere vorgesehene zu berücksichtigende semantische Kriterien zur Bearbeitungsreihenfolge der Änderungsoperationen sind:
- der die Änderungsoperation generierende Nutzer;
- der Rechner, von dem aus die Änderungsoperation erzeugt wurde;
- die Objektklasse des veränderten Objektes;
- der Eigentümer des die Änderungsoperation betreffenden Objektes;
- die Rolle des Objekteigentümers innerhalb der Gruppe, die auf das gemeinsame Objekt Zugriff hat, das durch die Änderungsoperation beeinflußt wurde;
- die Rolle des die Änderungsoperation generierenden Nutzers innerhalb der Gruppe, die auf das gemeinsame Objekt Zugriff hat, das durch die Änderungsoperation beeinflußt wurde;
- die Anzahl der Dateikopien, die bei einer Reintegration berücksichtigt werden, hierbei sowohl die Anzahl der wieder neu "angekoppelten" Dateikopien als auch die Anzahl der bei der Ankopplung sich schon in der Arbeitsgruppe befindenden Dateikopien;
- die Reihenfolge von Änderungen, die jeweils ein bestimmter Nutzer vorgenommen hat;
- die Anzahl von Änderungen, die an einer Dateikopie vorgenommen wurden, während diese Dateikopie "abgekoppelt" war.

In einer Weiterbildung des Verfahrens wird ein Raummanager RM vorgesehen, der auf allen Rechnern in gleicher Weise vorhanden ist. Dem Raummanager RM werden an den Informationsräumen IU vorgenommene Änderungsoperationen mit Hilfe von Nachrichten gemeldet und in einer Raummanager-Protokolldatei, die dem Raummanager RM zugeordnet wird, gespeichert. Mit der Protokollierung werden also alle Änderungsoperationen, die sich auf gesamte Informationsräume beziehen, aufgezeichnet. Auf diese Weise ist es möglich, auch das Hinzufügen oder Löschen von Informationsräumen IU bei dem Abgleich zu berücksichtigen, automatisiert bzw. teilautomatisiert anhand der Raummanager-Protokolldatei. Dadurch wird die Erkennung und die Behebung von Inkonsistenzen zu allgemein verfügbaren Informationsraumobjekten auf Operationsbasis möglich.

In einer Weiterbildung wird jedem Informationsraum IU jeweils eindeutig eine Informationsraum-Protokolldatei IUPDj zugeordnet, wobei ein Index j jede Informationsraum-Protokolldatei IUPDj kennzeichnet und eine natürliche Zahl ist. In den Informationsraum-Protokolldateien IUPDj werden Änderungen an Datensätzen gespeichert, die sich in dem jeweiligen Informationsraum IU befinden.

In diesem Dokument wurden folgende Veröffentlichungen zitiert:
[1] S. Davidson et al, Consistency in Partitioned Networks, Computing Surveys, Vol. 17, No. 3, ACM 0360-0300/85/0900-0341, S. 341 - 370, September 1985
[2] J. Munson et al, A Flexible Object Merging Framework, University of North Carolina-Chapel Hill, CSCW 94-10/94, ACM 0-89791-689-1/94/0010, S. 231 - 242, 1994
[3] M. Kolland et al, Information Sharing in Collaborative Environments, Proceedidngs of the third workshop on enabling technologys: In Prastructure for collaborative Enterprises, Morgantown, West Virginia, IEEE, S. 140 - 154, 17. bis 19. April 1994

## Patentansprüche

1. Verfahren zum rechnergestützten Abgleich mehrerer, in mindestens einem Rechner (Ri) gespeicherten Dateikopien (DKi) einer gespeicherten Datei (D),
- bei dem die Datei (D) Datensätze aufweist, die in Form einer Datenbankstruktur miteinander verknüpft sind (801),
- bei dem jeder Dateikopie (DKi) eine Protokolldatei (PDi) zugeordnet wird (802),
- bei dem Änderungsoperationen an den Dateikopien (DKi) in den zugeordneten Protokolldateien (PDi) gespeichert werden (803),
- bei dem anhand der Protokolldateien (PDi) ein Abgleich der Dateikopien (DKi) erfolgt (902), wobei Konflikte zwischen den Protokolldateien (PDi) entdeckt werden (806),
**dadurch gekennzeichnet, dass**
- Klammerkonstrukte vorgesehen sind, mit denen Änderungsoperationen in eine Folge von Änderungsoperationen zusammengefasst werden (804), welche eine komplexe Änderungsoperation definiert,
- beim Abgleich die Folgen als Ganzes zwischen den Protokolldateien verglichen werden
- jeweils eine komplexe Änderungsoperation abgeglichen wird, indem entsprechende Änderungen der Datei (D) oder der Dateikopien (DKi) jeweils ohne Unterbrechung durchgeführt werden.

2. Verfahren nach Anspruch 1,
- bei dem mindestens einem Benutzer Vorschläge zugänglich gemacht werden, wenn Konflikte zwischen den Protokolldateien (PDi) entdeckt werden (806),
- bei dem der Abgleich der entdeckten Konflikte abhängig von Benutzerentscheidungen über die Vorschläge erfolgt (807).

3. Verfahren nach Anspruch 1,
bei dem aus den Protokolldateien (PDi) jeweils mindestens eine Referenzprotokolldatei gewählt wird (901), welche bei dem Abgleich der entdeckten Konflikte vorrangig behandelt wird.

4. Verfahren nach einem der vorangegangen Ansprüche,
bei dem die Zusammenfassung von Änderungsoperationen mehrfach verschachtelt durchgeführt wird.

5. Verfahren nach einem der vorangegangen Ansprüche,
bei dem Vorschläge für den Abgleich der Dateikopien (DKi) ermittelt werden anhand der Protokolldateien (PDi) (15), wobei der Abgleich jeweils begonnen wird mit dem Vergleich von in den Protokolldateien (PDi) gespeicherten Löschungsoperationen (delete) oder Kreierungsoperationen (create) von Datensätzen der Datei (D) oder Dateikopien (DKi) (14).

6. Verfahren nach einem der vorangegangen Ansprüche,
bei dem nach dem Abgleich von in den Protokolldateien (PDi) gespeicherten Löschungsoperationen (delete) und/oder Kreierungsoperationen (create) von Datensätzen der Datei (D) oder Dateikopien (DKi) ein Abgleich von in den Protokolldateien (PDi) gespeicherten Strukturveränderungsoperationen
(createLink, deleteLink) erfolgt.

7. Verfahren nach einem der vorangegangen Ansprüche,
bei dem die Datensätze in Form einer hierarchischen Datenbankstruktur miteinander verknüpft sind.

8. Verfahren nach Anspruch 7,
bei dem die Reihenfolge der berücksichtigten Löschungsoperationen (delete) oder Kreierungsoperationen (create) von Datensätzen der Datei (D) oder Dateikopien (DKi) durch die Position der Datensätze in der hierarchischen Datenbankstruktur festgelegt wird, wobei der Abgleich erfolgt beginnend mit Änderungsoperationen an einem Wurzeldatensatz der Datei (D) fortschreitend zu Änderungsoperationen an Datensätzen, die jeweils abhängig von schon bearbeiteten Datensätzen sind.

9. Verfahren nach einem der Ansprüche 1 bis 3,
- bei dem die Datensätze mindestens einem Informationsraum (IU) zugeordnet werden (31), und
- bei dem Vorschläge für den Abgleich der Dateikopien (DKi) ermittelt werden anhand der Protokolldateien (PDi) (15), wobei der Abgleich begonnen wird mit dem Vergleich von ganzen Informationsräumen (IU) (32).

10. Verfahren nach Anspruch 9,
bei dem die Reihenfolge berücksichtigter Änderungsoperationen von Datensätzen innerhalb jedes Informationsraumes (IU) der Datei (D) oder Dateikopien (DKi) durch die Position der Datensätze in der hierarchischen Datenbankstruktur festgelegt wird, wobei der Abgleich erfolgt beginnend mit Änderungsoperationen an einem Wurzeldatensatz der Datei (D) fortschreitend zu Änderungsoperationen an Datensätzen, die jeweils abhängig von schon bearbeiteten Datensätze sind.

11. Verfahren nach Anspruch 9 oder 10,
bei dem der Abgleich begonnen wird mit dem Abgleich von in den Protokolldateien (PDi) gespeicherten Löschoperationen (delete) und/oder Kreierungsoperationen (create) von Datensätzen der Datei (D) oder Dateikopien (DKi) in jeweils einem Informationsraum (IU) (14).

12. Verfahren nach einem der Ansprüche 9 bis 11,
bei dem nach dem Abgleich von in den Protokolldateien (PDi) gespeicherten Löschoperationen (delete) und/oder Kreierungsoperationen (create) von Datensätzen der Datei (D) oder Dateikopien (DKi) ein Abgleich von in den Protokolldateien (PDi) gespeicherten Strukturveränderungsoperationen jeweils in einem Informationsraum (IU) erfolgt (17).

13. Verwendung des Verfahren nach einem der Ansprüche 1 bis 12 in einem Computer Supported Cooperative Work CSCW-System,
bei dem bei jeder Änderung der Zusammensetzung Teilnehner an einer Sitzung des CSCW-Systems eine neue, mit einer eindeutigen Bezeichnung **gekennzeichnet**e Sitzungssequenz (S1, S2) kreiert wird zur Kennzeichnung von Operationssequenzen in den Protokolldateien (PDi).

14. Verfahren nach einem der Ansprüche 1 bis 12,
bei dem die Semantik der Änderungsoperationen beim Vergleich der Änderungsoperationen berücksichtigt wird.

15. Verfahren nach Anspruch 14,
bei dem die Semantik **dadurch** berücksichtigt wird, dass anhand wählbarer Vorgaben Änderungsoperationen zeitliche Priorität beim Vergleich besitzen, die während eines bestimmten vorgebbaren Zeitraums ausgeführt werden.

16. Verfahren nach Anspruch 14 oder 15,
bei dem die Semantik **dadurch** berücksichtigt wird, dass anhand wählbarer Vorgaben Änderungsoperationen zeitliche Priorität beim Vergleich besitzen, die sich auf bestimmte vorgebbare Datensätze und/oder Informationsräume (IU) beziehen.

## Revendications

1. Procédé pour l'ajustement assisté par ordinateur de plusieurs copies de fichier (DKi), mémorisées dans au moins un ordinateur (Ri), d'un fichier (D) mémorisé,
- dans lequel le fichier (D) présente des ensembles de données qui sont associés entre eux sous la forme d'une structure de banque de données (801),
- dans lequel un fichier de protocole (PDi) est attribué à chaque copie de fichier (DKi) (802),
- dans lequel des opérations de modification concernant les copies de fichier (DKi) sont mémorisées dans les fichiers de protocole (PDi) attribués (803),
- dans lequel un ajustement des copies de fichier (DKi) intervient à l'aide des fichiers de protocole (PDi) (902), des conflits entre les fichiers de protocole (PDi) étant détectés (806),
**caractérisé en ce que**
- des constructions de parenthèse sont prévues, avec lesquelles des opérations de modification sont regroupées en une séquence d'opérations de modification (804), qui définit une opération de modification complexe,
- lors de l'ajustement, les séquences sont comparées globalement entre les fichiers de protocole,
- à chaque fois une opération de modification complexe est ajustée en effectuant des modifications appropriées du fichier (D) ou des copies de fichier (DKi) respectivement sans interruption.

2. Procédé selon la revendication 1,
- dans lequel des propositions sont rendues accessibles à l'au moins un utilisateur lorsque des conflits entre les fichiers de protocole (PDi) sont détectés (806),
- dans lequel l'ajustement des conflits détectés s'effectue en fonction des décisions d'utilisateur concernant les propositions (807).

3. Procédé selon la revendication 1,
dans lequel on choisit à partir des fichiers de protocole (PDi) respectivement au moins un fichier de protocole de référence (901), qui est traité en priorité lors de l'ajustement des conflits détectés.

4. Procédé selon l'une quelconque des revendications précédentes,
dans lequel le regroupement d'opérations de modification est effectué plusieurs fois de façon imbriquée.

5. Procédé selon l'une quelconque des revendications précédentes,
dans lequel des propositions pour l'ajustement des copies de fichier (DKi) sont déterminées à l'aide des fichiers de protocole (PDi) (15), l'ajustement étant commencé respectivement avec la comparaison d'opérations d'effacement (delete) ou d'opérations de création (create) d'ensembles de données du fichier (D) ou de copies de fichier (DKi), mémorisées dans les fichiers de protocole (PDi) (14).

6. Procédé selon l'une quelconque des revendications précédentes,
dans lequel, après l'ajustement d'opérations d'effacement (delete) et/ou d'opérations de création (create) d'ensembles de données du fichier (D) ou de copies de fichier (DKi), mémorisées dans les fichiers de protocole (PDi), on procède à un ajustement d'opérations de modification de structure (createLink, deleteLink) mémorisées dans les fichiers de protocole (PDi).

7. Procédé selon l'une quelconque des revendications précédentes,
dans lequel les ensembles de données sont associés entre eux sous la forme d'une structure de banque de données hiérarchique.

8. Procédé selon la revendication 7,
dans lequel on définit l'ordre de succession des opérations d'effacement (delete) ou des opérations de création (create) d'ensembles de données du fichier (D) ou de copies de fichier (DKi) prises en compte par la position des ensembles de données dans la structure de banque de données hiérarchique, l'ajustement s'effectuant en commençant avec des opérations de modification sur un ensemble de données de racine du fichier (D) et en progressant vers des opérations de modification concernant des ensembles de données qui sont respectivement dépendants d'ensembles de données déjà traités.

9. Procédé selon l'une quelconque des revendications 1 à 3,
- dans lequel les ensembles de données sont attribués au moins à un espace d'information (IU) (31), et
- dans lequel on détermine des propositions pour l'ajustement des copies de fichier (DKi) à l'aide des fichiers de protocole (PDi) (15), l'ajustement étant commencé avec la comparaison d'espaces d'information entiers (IU) (32).

10. Procédé selon la revendication 9,
par lequel l'ordre de succession d'opérations de modification prises en compte d'ensembles de données à l'intérieur de chaque espace d'information (IU) du fichier (D) ou de copies de fichier (DKi) est défini par la position des ensembles de données dans la structure de banque de données hiérarchique, l'ajustement s'effectuant en commençant avec des opérations de modification sur un ensemble de données de racine du fichier (D) et en progressant vers des opérations de modification sur des ensembles de données qui sont respectivement dépendants d'ensembles de données déjà traités.

11. Procédé selon la revendication 9 ou 10,
dans lequel l'ajustement est commencé avec l'ajustement d'opérations d'effacement (delete) et/ou d'opérations de création (create) d'ensembles de données du fichier (D) ou de copies de fichiers(DKi), mémorisées dans les fichiers de protocole (PDi), dans respectivement un espace d'information (IU) (14).

12. Procédé selon l'une quelconque des revendications 9 à 11,
dans lequel, après l'ajustement d'opérations d'effacement (delete) et/ou d'opérations de création (create) d'ensembles de données du fichier (D) ou de copies de fichier (DKi), mémorisées dans les fichiers de protocole (PDi), un ajustement d'opérations de modification de structure mémorisées dans les fichiers de protocole (PDi) intervient respectivement dans un espace d'information (IU) (17).

13. Utilisation du procédé selon l'une quelconque des revendications 1 à 12 dans un Computer Supported Cooperative Work CSCW-System,
dans lequel, lors de chaque modification de la composition des abonnés à une réunion du système CSCW, on crée une nouvelle séquence de réunion (S1, S2) repérée par une désignation univoque pour le marquage de séquences d'opération dans les fichiers de protocole (PDi).

14. Procédé selon l'une quelconque des revendications 1 à 12,
dans lequel la sémantique des opérations de modification est prise en compte lors de la comparaison des opérations de modification.

15. Procédé selon la revendication 14,
dans lequel la sémantique est prise en compte par le fait que, à l'aide de spécifications pouvant être choisies, des opérations de modification, qui sont effectuées pendant une certaine période prédéfinissable, présentent une priorité dans le temps lors de la comparaison.

16. Procédé selon la revendication 14 ou 15,
dans lequel la sémantique est prise en compte par le fait que, à l'aide de spécifications pouvant être choisies, des opérations de modification, qui concernent certains ensembles de données et/ou espaces d'information (IU) prëdéfinissables, présentent une priorité dans le temps lors de la comparaison.

## Claims

1. A method for computer-aided synchronisation of a plurality of data copies (DKi) of a stored file (D), said data copies being stored on at least one computer (Ri),
- in which the file (D) has data records which are linked together (801) in the form of a database structure,
- in which a log file (PDi) is assigned (802) to each file copy (DKi),
- in which change operations on the file copies (DKi) are stored (803) in the assigned log files (PDi),
- in which a synchronisation of the file copies (DKi) takes place (902) on the basis of the log files (PDi), wherein conflicts between the log files (PDi) are detected (806),
**characterised in that**
- provision is made for bracket constructs whereby change operations can be combined (804) into a sequence of change operations which defines a complex change operation,
- the sequences are compared as a whole between the log files during the synchronisation,
- one complex change operation is synchronised in each case, **in that** corresponding changes to the file (D) or the file copies (DKi) are carried out without interruption in each case.

2. The method as claimed in claim 1,
- in which proposals are made available to at least one user if conflicts between the log files (PDi) are detected (806),
- in which the synchronisation of the detected conflicts takes place (807) depending on user decisions in relation to the proposals.

3. The method as claimed in claim 1,
in which at least one reference log file is selected (901) from the log files (PDi) in each case, said selected log file being given priority during the synchronisation of the detected conflicts.

4. The method as claimed in one of the preceding claims,
in which the combination of change operations is carried out in a plurally nested manner.

5. The method as claimed in one of the preceding claims,
in which proposals for the synchronisation of the file copies (DKi) are established on the basis of the log files (PDi) (15), wherein the synchronisation starts in each case with the comparison of delete operations (delete) or create operations (create) which are stored in the log files (PDi) and relate to data records in the file (D) or the file copies (DKi) (14).

6. The method as claimed in one of the preceding claims,
in which after the synchronisation of delete operations (delete) and/or create operations (create) which are stored in the log files (PDi) and relate to data records in the file (D) or the file copies (DKi), there follows a synchronisation of structural change operations (createLink, deleteLink) which are stored in the log files (PDi).

7. The method as claimed in one of the preceding claims,
in which the data records are associated in the form of a hierarchical database structure.

8. The method as claimed in claim 7,
in which the sequence of the relevant delete operations (delete) or create operations (create) relating to data records in the file (D) or the file copies (DKi) is determined by the position of the data records in the hierarchical database structure, wherein the synchronisation takes place starting with change operations relating to a root data record of the file (D) and progressing to change operations relating to data records which are dependent on data records that have already been processed in each case.

9. The method as claimed in one of the claims 1 to 3,
- in which the data records are assigned (31) to at least one information area (IU), and
- in which proposals for the synchronisation of the file copies (DKi) are established on the basis of the log files (PDi) (15), wherein the synchronisation starts with the comparison of whole information areas (IU) (32).

10. The method as claimed in claim 9,
in which the sequence of relevant change operations relating to data records within each information area (IU) of the file (D) or the file copies (DKi) is determined by the position of the data records in the hierarchical database structure, wherein the synchronisation takes place starting with change operations relating to a root data record of the file (D) and progressing to change operations relating to data records which are dependent on data records that have already been processed in each case.

11. The method as claimed in claim 9 or 10,
in which the synchronisation starts with the synchronisation of delete operations (delete) and/or create operations (create) which are stored in the log files (PDi) and relate to data records in the file (D) or file copies (DKi) in one information area (IU) in each case (14).

12. The method as claimed in one of the claims 9 to 11,
in which after the synchronisation of delete operations (delete) and/or create operations (create) which are stored in the log files (PDi) and relate to data records in the file (D) or file copies (DKi), there follows a synchronisation of structural change operations which are stored in the log files (PDi) in one information area (IU) in each case (17).

13. A use of the method as claimed in one of the claims 1 to 12 in a Computer Supported Cooperative Work CSCW system,
in which for each change in the composition of participants in a session of the CSCW system, a new session sequence (S1, S2) which is identified by a unique designation is created for identifying operation sequences in the log files (PDi).

14. The method as claimed in one of the claims 1 to 12,
in which the semantics of the change operations are taken into consideration when comparing the change operations.

15. The method as claimed in claim 14,
in which the semantics are taken into consideration in that, on the basis of optional parameters, change operations have chronological priority in the comparison if they were executed during a specific predeterminable period.

16. The method as claimed in claim 14 or 15,
in which the semantics are taken into consideration in that, on the basis of optional parameters, change operations have chronological priority in the comparison if they relate to specific predeterminable data records and/or information areas (IU).
